# EUROPÄISCHE PATENTSCHRIFT

(11) **EP 3 368 698 B1**
(45) Veröffentlichungstag und Bekanntmachung des Hinweises auf die Patenterteilung: **09.06.2021**
(21) Anmeldenummer: 16801697.0
(22) Anmeldetag: 25.10.2016
(51) Int. Cl.: C22B 3/00, C22B 11/00, C22B 7/00

(54) **VERFAHREN ZUR GEWINNUNG VON EDELMETALLEN**
METHOD FOR THE RECOVERY OF PRECIOUS METAL
PROCÉDÉ DE RÉCUPÉRATION DE MÉTAUX PRÉCIEUX

(30) Priorität: 27.10.2015 DE 102015118279
(43) Veröffentlichungstag der Anmeldung: 05.09.2018
(73) Patentinhaber: Max-Planck-Institut für Eisenforschung GmbH, 40237 Düsseldorf (DE)
(72) Erfinder: HODNIK, Nejc, 1000 Ljubljana (SI); BALDIZZONE, Claudio, 70178 Stuttgart (DE); MAYRHOFER, Karl, 91054 Buckenhof (DE)
(74) Vertreter: Christophersen & Partner Partnerschaft mbB Patentanwälte
(86) Internationale Anmeldenummer: PCT/DE2016/100498
(87) Internationale Veröffentlichungsnummer: WO 2017/071685

(56) Entgegenhaltungen:
- EP-A1- 2 824 201
- DE-A1- 2 525 829
- MANIS KUMAR JHA ET AL: "Hydrometallurgical recovery/recycling of platinum by the leaching of spent catalysts: A review", HYDROMETALLURGY., Bd. 133, 1. Februar 2013 (2013-02-01), Seiten 23-32, XP055296220, NL ISSN: 0304-386X, DOI: 10.1016/j.hydromet.2012.11.012
- DE SA PINHEIRO A A ET AL: "Recovery of platinum from spent catalysts in a fluoride-containing medium", HYDROMETALLURGY, ELSEVIER SCIENTIFIC PUBLISHING CY. AMSTERDAM, NL, Bd. 74, Nr. 1-2, 1. August 2004 (2004-08-01), Seiten 77-84, XP004513065, ISSN: 0304-386X, DOI: 10.1016/J.HYDROMET.2004.01.001

## Beschreibung

Die vorliegende Erfindung betrifft ein Verfahren zur Gewinnung von Edelmetallen aus edelmetallhaltigen Materialien.

Edelmetalle sind Metalle, die besonders korrosionsbeständig sind. Zu ihnen zählen insbesondere Gold und Silber, aber auch die Platinmetalle. Gold und Silber werden bereits seit dem Altertum wegen ihrer Korrosionsbeständigkeit zur Herstellung von Schmuck und Münzen verwendet. Insbesondere die Metalle Platin, Palladium und Rhodium sind vielfach in Auto-Katalysatoren enthalten. Weitere Anwendungsgebiete von Edelmetallen sind Elektro- und elektronische Geräte, wie Leiterplatten, Chips, Anoden und Kathoden sowie Sputter-Targets, aber auch Brennstoffzellen.

Edelmetalle zählen zu wertvollen Rohstoffen, weshalb das Wiedergewinnen dieser Rohstoffe aus Altstoffen bereits seit vielen Jahren durchgeführt wird. Das Edelmetallrecycling selbst ist ein wertvoller Materialkreislauf, wobei es schwierig ist, die Edelmetalle von den Produkten, in denen sie eingearbeitet sind, zu trennen. Es gibt unterschiedliche Recyclingarten, so können beispielsweise Legierungen als sogenanntes schmelzbares Scheidgut aufbereitet werden. Die wiederaufzubereitenden Elemente werden in einem Schmelzofen zu Granalien oder Barren verarbeitet und anschließend durch Silber- und/oder Elektrolyse oder nasschemische Verfahren mit hoher Reinheit zurückgewonnen. Eine Möglichkeit für die Edelmetallrückgewinnung aus Altstoffen, welche sich nicht durch Schmelzen zurückgewinnen lassen, ist die sogenannte Naturaltrennung. Die Edelmetalle werden über eine klassische Trennung wie Ausfällen, Filtern oder Waschen in Reinform zurückgewonnen.

Darüber hinaus ist zur Edelmetallrückgewinnung ein Verfahren bekannt, in welchem als Ausgangsmaterial sogenanntes Gekrätz eingesetzt wird. Das bedeutet, dass die Altstoffe zum größten Teil aus organischen Materialien wie Papier oder Kunststoff bestehen und kleine Bestandteile von Edelmetallen enthalten. Die Materialien werden in einem Ofen verbrannt und die gewonnene metallhaltige Asche über den Schmelzprozess oder über die nasschemische Reinigung weiterverwertet.

In Autokatalysatoren und anderen Abgasreinigungskatalysatoren werden ebenfalls Edelmetalle als Katalysatormetalle eingesetzt. Die Katalysatoren sind meist mit einem Edelmetall beschichtet, wobei aufgrund ihrer katalytischen Eigenschaften am häufigsten die Metalle Platin, Palladium und Rhodium eingesetzt werden. Die Rückgewinnung der Edelmetalle aus dem Katalysator erfolgt in der Regel dadurch, dass die Katalysatoren zunächst vom Gehäuse abgetrennt werden. Die Katalysatorkeramik wird anschließend zu Pulver vermahlen und das erhaltene Katalysatorpulver in einer Scheideanstalt in an sich bekannter Weise wiederaufbereitet.

Aufgrund ihres wirtschaftlichen Wertes ist man bestrebt, Edelmetalle aus Abfallstoffen, auch Altstoffe oder Wertstoffe genannt, möglichst vollständig zurückzugewinnen. Die aus dem Stand der Technik bekannten Verfahren sind kostenintensiv und umfassen in der Regel mehrere Arbeitsschritte. Darüber hinaus wird zur Gewinnung von Edelmetallen in der Regel Königswasser eingesetzt, ein sehr aggressives Gemisch aus konzentrierter Salzsäure und konzentrierter Salpetersäure, das naszierendes Chlor und Nitrosylchlorid enthält. Diese Komponente ist sowohl toxisch als auch stark ätzend und brandfördernd, so dass der Einsatz von Königswasser hohe Sicherheitsmaßnahmen erfordert.

Manis Kumar Jha et al geben in "Hydrometallurgical recovery / recyling of platinum by the leaching of spent catalysts: A review" Hydrometallurgy, Februar 2013, Bd. 133, S. 23 - 32, eine Übersicht über mögliche Verfahren zur Rückgewinnung von Platin aus verbrauchten Katalysatoren. Beispielsweise wird das Auslaugen von Pt in Gegenwart von H₂O₂ offenbart, so kann ein Katalysator auf Basis von Al₂O₃ beladen mit Pt in Gegenwart von H₂O₂ in starken anorganischen Säuren aufgelöst werden. Wie die Edelmetalle bzw. Platin in elementares Metall überführt wird, wird nicht offenbart.

Der vorliegenden Erfindung lag daher die Aufgabe zugrunde, ein Verfahren zur Gewinnung von Edelmetallen zur Verfügung zu stellen, mit welchem die Edelmetalle auf einfache Weise und in hoher Reinheit gewonnen werden können.

Gegenstand der vorliegenden Erfindung ist demgemäß ein Verfahren zur Gewinnung von Edelmetallen aus edelmetallhaltigen Materialien in wässeriger Lösung, welches die Schritte umfasst
A) Inkontaktbringen der edelmetallhaltigen Altstoffe mit einem Oxidationsmittel ,
B) Inkontaktbringen des Reaktionsproduktes aus Schritt A mit einem Reduktionsmittel, wobei die Verfahrensschritte A und B einen Reaktionszyklus darstellen, der wiederholt wird.

Das erfindungsgemäße Verfahren ermöglicht es, Edelmetalle aus edelmetallhaltigen Materialien genannt, auf einfache Weise wiederzugewinnen. Beide Verfahrensschritte A und B können in der gleichen Vorrichtung durchgeführt werden. Beispiele für edelmetallhaltige Materialien sind sogenannte Altstoffe, auch Altprodukte oder Wertstoffe genannt, oder Erze und andere Materialien, die Edelmetalle enthalten. Zu den einsetzbaren Altstoffen zählen eine Vielzahl von Abfallprodukte, elektronische Abfallprodukte, Leiterplatten, Chips, Elektronikkontakte bzw. Kontaktnieten, Abfall von Stechkontaktherstellern und Galvanikbetrieben oder Bestückern als Produktionsausschuss, Anoden, Kathoden oder Sputter-Targets, Dentalprodukte, edelmetallhaltiges Gekrätz, Rückstände von Galvanikbädern, wie aus Galvanikfiltern, Harzen, Schlämmen, Bädern, Elektrolyten und Anodenresten, Autokatalysatoren, Brennstoffzellen sowie auch edelmetallhaltige Farbreste einschließlich Gold- und Silberpasten, Silberlote, Putzlappen usw. Die Altstoffe können als solche, also ohne chemische oder mechanische Vorbehandlung eingesetzt werden. Je nach Form der Altstoffe ist es auch möglich, die eingesetzten Materialien vor Durchführung des Verfahrens in einer geeigneten Mühle oder einer anderen Vorrichtung zu zerkleinern oder zu vermahlen.

Ein weiterer Vorteil des erfindungsgemäßen Verfahrens ist es, dass auf den Einsatz von Königswasser verzichtet werden kann, wodurch nicht nur der Einsatz dieses relativ kostenintensiven Materials sondern auch die apparativen Anforderungen gesenkt werden können. Da Königswasser eine sehr aggressive Flüssigkeit ist, welche sowohl naszierendes Chlor als auch Nitrosylchlorid bildet, wird auf dessen Einsatz aus Umweltschutzgründen und aufgrund der gesundheitlichen Gefahren für die Arbeiter verzichtet.

Das Erfindungsgemäße Verfahren umfasst Zyklen aus einem Oxidationsschritt und einem Reduktionsschritt, wobei sowohl mit Verfahrensschritt A als auch mit Verfahrensschritt B begonnen werden kann. Der Verfahrensschritt B, also die Reduktionsreaktion, wird insbesondere dann als erster Verfahrensschritt gewählt, wenn die Edelmetalle in den edelmetallhaltigen Materialien als Oxide oder in anderer oxidierter Form vorliegen. Häufig weisen die Edelmetalle eine dünne Oxidschicht auf, die in dem Reduktionsschritt entfernt wird. Nachfolgend wird der Verfahrensschritt A und B durchgeführt. Die Zyklen aus den Verfahrensschritten A und B können beliebig oft wiederholt werden, vorzugsweise bis im eingesetzten Material kein oder nahezu kein Edelmetall mehr nachweisbar ist bzw. bis sich der Gehalt an gewonnenen Edelmetall in der Reaktionslösung nicht mehr erhöht. Es hat sich als vorteilhaft erwiesen, den Zyklus aus den Schritten A und B mindestens 3 mal zu wiederholen, mit einer Anzahl von Zyklen zwischen 3 und 20 können die Edelmetalle nahezu vollständig aus dem Altstoff gewonnen werden.

Die Untersuchung des Materials darauf, ob noch Edelmetalle enthalten sind, kann während der Durchführung des Verfahrens in regelmäßigen Abständen erfolgen. Eine entsprechende Analyse kann unmittelbar durch Einsatz von spektroskopischen Verfahren oder auch durch Probenentnahme mit anschließender Analyse erfolgen.

Die Edelmetalle, die nach dem erfindungsgemäßen Verfahren aus den edelmetallhaltigen Materialien gewonnen werden können, sind vorzugsweise Edelmetalle aus der Platingruppe, insbesondere Pt, Pd, Rh, Au, Ru, Ir, Os und/oder Ag.

Zur Durchführung des erfindungsgemäßen Verfahrens wird in Verfahrensschritt A das edelmetallhaltige Material mit einem Oxidationsmittel in Kontakt gebracht. Als Oxidationsmittel sind beliebige aus dem Stand der Technik bekannte Oxidationsmittel geeignet, insbesondere O₂, O₃ (Ozon), H₂O₂, HClO₄ oder deren Salze, HClO₃ oder deren Salze, Alkalipermanganat, Alkalipercarbonate, Alkalipersulfate und beliebige Gemische der voranstehenden.

Das erfindungsgemäße Verfahren wird üblicherweise in wässeriger Lösung durchgeführt, vorzugsweise Gegenwart einer starken Säure oder starken Base. Der pH-Wert des Reaktionsgemisches liegt im starken sauren Bereich, vorzugsweise < 3, oder im stark basischen Bereich, vorzugsweise > 10, insbesondere > 11. Bei einem schwach sauren, neutralen oder schwach basischem pH-Wert verringert sich die Reaktionsgeschwindigkeit. Bemerkenswert ist, dass die Reaktionsgeschwindigkeit in einer 0,1 M HCl vergleichbar ist mit der Reaktionsgeschwindigkeit in Königswasser, obwohl dessen pH-Wert deutlich niedriger ist. Als Säuren können HCl, HClO₄, H₂SO₄, HNO₃, Königswasser und jede andere anorganische Säure eingesetzt werden, wobei HClO₄ und HCl bevorzugt sind. Als Basen kommen insbesondere Alkalihydroxide, wie NaOH und KOH in Betracht.

Zur Durchführung des Verfahrensschritts A wird das Oxidationsmittel zum Gemisch aus wässeriger Lösung und edelmetallhaltigem Altstoff zugeführt. Das Oxidationsmittel kann in reiner Form oder im Gemisch mit inerten Verbindungen, die die Reaktion nicht negativ beeinflussen eingesetzt werden. Wird ein gasförmiges Oxidationsmittel verwendet, kann dieses entweder als reines Gas oder im Gemisch mit einem Inertgas, wie N₂ oder Ar, zugeführt werden.

Vorzugsweise wird die wässerige Lösung während der Zufuhr des Oxidationsmittels gerührt. Der Verfahrensschritt A wird vorzugsweise in einem Temperaturbereich von -21 °C bis 150 °C, insbesondere bei Raumtemperatur, durchgeführt.

Im Verfahrensschritt B wird das Reaktionsgemisch mit einem Reduktionsmittel in Kontakt gebracht. Das Reduktionsmittel ist vorzugsweise flüssig oder gasförmig, insbesondere ausgewählt aus H₂S, SO₂, SO₃, CO, H₂, Methanol, Ethanol und beliebigen Gemischen der Voranstehenden. Das Reduktionsmittel kann in reiner Form oder im Gemisch mit inerten Verbindungen, die die Reaktion nicht negativ beeinflussen eingesetzt werden, wie mit Inertgasen, z. B. N₂ oder Ar oder Gemischen daraus. Der Verfahrensschritt B wird vorzugsweise in einem Temperaturbereich von -21 °C bis 150 °C, insbesondere bei Raumtemperatur, durchgeführt.

Um zu vermeiden, dass sich durch den Kontakt von noch vorhandenem Ozon aus Verfahrensschritt A und Reduktionsmittel aus Schritt B ein explosives Gemisch bildet, hat es sich als bevorzugt erwiesen, wenn das Reaktionsgemisch vor dem Einleiten des Reduktionsmittels zunächst mit einem Inertgas gespült wird, beispielsweise mit N₂ oder Ar.

Erfindungsgemäß wird die Reaktion in Gegenwart eines Komplexbildners durchgeführt. Geeignete Komplexbildner sind insbesondere Halogenid- oder Pseudohalogenid-haltige Salze. Bevorzugt werden Alkalihalogenide oder -pseudohalogenide, insbesondere Alkalichloride, -bromide, -iodide oder -cyanide, -cyanate oder -isocyanate eingesetzt. Besonders geeignete Beispiele sind NaCl, KCl, NaBr, KBr, NaI, KI, NaCN, NaOCN, NaSCN, KCN, KOCN und/oder KSCN. Die Komplexbildner können zur wässerigen Lösung in einer Menge von 1 x 10⁻⁵ mol/l bis zur Sättigungskonzentration zugesetzt werden.

Die Erfinder haben festgestellt, dass das Edelmetall während der jeweiligen Verfahrensschritte in Lösung geht. Der genaue Reaktionsablauf ist bisher nicht bekannt, es wird jedoch angenommen, dass die Komplexbildner und in gewissem Umfang auch die Oxidations- oder Reduktionsmittel, wie CO, das im Verfahrensschritt A bzw. B oxidierte oder reduzierte Metall komplexieren und in Lösung halten.

Wie bereits erwähnt, wird die Anzahl der Zyklen aus Reduktion und Oxidation bzw. Oxidation und Reduktion so häufig wiederholt, bis sich der Gehalt an Edelmetallen in der Reaktionslösung nicht mehr erhöht. Anschließend werde die Edelmetalle in an sich bekannter Weise aus der Reaktionslösung isoliert und ggf. weiteren Ver- oder Aufbereitungsschritten zugeführt. Zur weiteren Verarbeitung und Isolierung des Edelmetalls kann die das Edelmetall enthaltende Reaktionslösung von den Feststoffen abfiltriert werden und das Edelmetall chemisch oder elektrochemisch gewonnen werden. Es ist auch möglich, das Edelmetall direkt aus der Reaktionslösung in Gegenwart der Reste an Altstoffen elektrochemisch abzuscheiden, in dem eine Elektrode in der Lösung angeordnet und eine Spannung angelegt wird, die dem elektrochemischen Potential des zu isolierenden Edelmetalls entspricht, so dass nur dieses konkrete Edelmetall auf der Elektrode abgeschieden wird.

### Beispiele

### Beispiel 1

Zu 100 ml HClO₄ wurden und 10 µl 1 M NaCl hinzugegeben, so dass eine Lösung mit einer Chloridionenkonzentration von 0,1 M erhalten wurde. 17,0128 µg Pt-Partikel mit einer Teilchengröße von 3 nm auf Aktivkohle mit großer Oberfläche (Beladung mit Metall 46%) wurde auf einer glatten Kohlenstoff-Oberfläche abgeschieden. Der Kohlenstoff-Träger wurde in die Elektrolytlösung getaucht und mit 400 rpm rotiert. Das Becherglas wies zwei Zugänge für Gase auf.

Vier unterschiedliche Versuche wurden durchgeführt, um den Einfluss von (i) Elektrolyt, (ii) Ozon, (iii) Austausch zwischen Ozon und Wasserstoff, (iv) Austausch zwischen Ozon und CO und (v) Austausch zwischen Ozon und CO in 0.1 M HCl als Elektrolyt zu untersuchen.
(i) Rühren der Suspension in Gegenwart von Luft über einen Zeitraum von 35 Minuten
(ii) Rühren der Suspension in Gegenwart von O₃ über einen Zeitraum von 35 Minuten
(iii) Rühren der Suspension jeweils über fünf Minuten in O₃, Ar, O₂, Ar, O₃, Ar, H₂, Ar
(iv) Rühren der Suspension über jeweils fünf Minuten in O₃, Ar, Co, Ar, O₃, Ar, CO und Ar.

Die Ergebnisse sind in der nachfolgenden Tabelle wiedergegeben.

| | Umsetzung mit | % Pt |
|---|---|---|
| 1 | | 0.51 |
| 2 | O₃ | 1.15 |
| 3 | O₃ / H₂ | 6.26 |
| 4 | O₃ / CO | 49.83 |

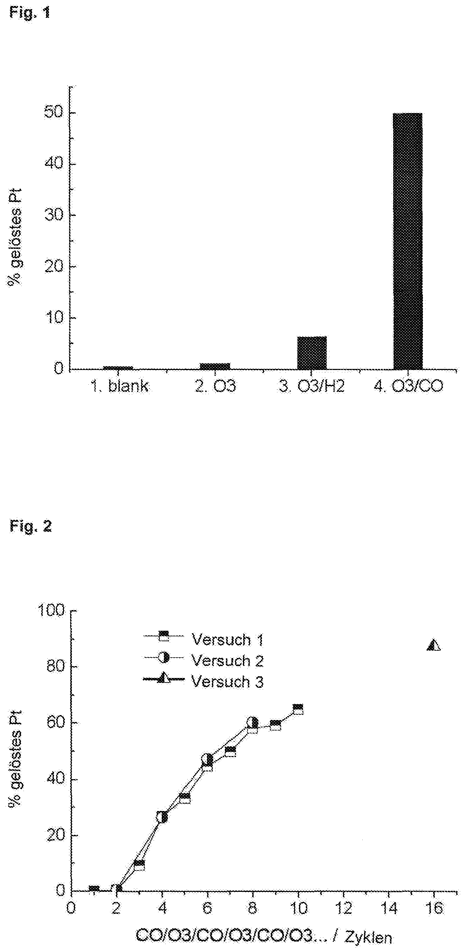

Grafisch sind die Ergebnisse der Versuche (i) bis (iv) sind in den Figuren 1 dargestellt.

### Beispiel 2

In 200 ml HClO₄ und 10 µl 1 M NaCl Beispiel 1 wurden Pt-Partikel mit einer Teilchengröße von 3 nm auf Aktivkohle mit großer Oberfläche (Beladung mit Metall 46 %) (erhältlich von Tanaka Kikinzoku Intern, Japan) mit einer Konzentration von 0,1 mg/ml in einem Becherglas, das einen Magneten enthielt, suspendiert. Die Lösung wurde während des Verfahrens unter Verwendung eines Magnetrührers gerührt. Das Becherglas wies zwei Zugänge für Gase auf.

Ablauf:
20 min O₃, 10 min Ar, 10 min CO, 10 min Ar, 10 min O₃, 5 min Ar, 10 min CO, 10 min Ar, 10 min O₃, 5 min Ar, ...

Die Ergebnisse sind in Figur 2 dargestellt.

### Beispiel 3

In einem Becherglas mit 200 ml 0,1 M HCl wurden Nanopartikel mit Pt und Pd, die im Washcoat auf Si-Al- basierter wabenartiger Keramik eingebettet waren, suspendiert und über einen 200 nm-Filter filtriert. Das Becherglas wies zwei Zugänge für Gase auf. Das Verfahren wurde unter Rühren durchgeführt.

Ablauf:
CO 20 min + Ar 5 min + O₃ 20 min + Ar 5 min + CO 20 min + Ar 5 min + O₃ 20 min + 5 min Ar ...

Die Ergebnisse sind in der nachfolgenden Tabelle wiedergegeben.

| | Umsetzung mit | % PT (dissolved) |
|---|---|---|
| 1 | | 0.001 |
| 2 | sample | 0.004 |
| 3 | 1 cycle | 3,113 |
| 5 | 6 cycles | 6,980 |
| 6 | 12 cycles | 24,211 |
| 7 | 19 cycles | 42,594 |

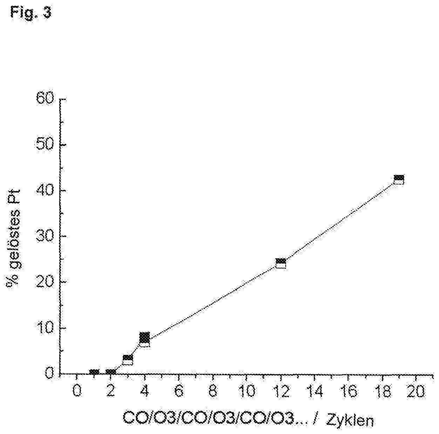

Grafisch sind die Ergebnisse in Figur 3 dargestellt.

Wie die Versuchsergebnisse zeigen, steigt die Pt-Konzentration mit der Zahl der Zyklen (Umsetzung jeweils mit Ozon und CO) linear an. Das bedeutet, dass schließlich eine Rückgewinnung des Edelmetalls von nahezu bis 100 % möglich ist.

## Patentansprüche

1. Verfahren zur Gewinnung von Edelmetall aus edelmetallhaltigen Materialien in wässeriger Lösung, welches die Schritte umfasst
A) Inkontaktbringen der edelmetallhaltigen Materialien mit einem Oxidationsmittel,
B) Inkontaktbringen des edelmetallhaltigen Materials mit einem Reduktionsmittel,
wobei die Verfahrensschritte A und B einen Reaktionszyklus darstellen, der wiederholt wird.

2. Verfahren nach Anspruch 1, **dadurch gekennzeichnet, dass** die Edelmetalle ausgewählt sind aus der Gruppe bestehend aus Pt, Pd, Rh, Au, Ru, Ir, Os und Ag.

3. Verfahren nach einem der Ansprüche 1 bis 4, **dadurch gekennzeichnet, dass** die Reaktion bei einem pH-Wert ≤ 3 oder ≥ 10 durchgeführt wird.

4. Verfahren nach einem der Ansprüche 1 bis 3, **dadurch gekennzeichnet, dass** der pH-Wert mit einer Säure, die ausgewählt ist aus HCl, HClO₄, H₂SO₄, HNO₃, Königswasser und beliebigen Gemischen der Voranstehenden, oder einem Alkalihydroxid, eingestellt wird.

5. Verfahren nach einem der Ansprüche 1 bis 4, **dadurch gekennzeichnet, dass** mindestens einer der beiden Verfahrensschritte in Gegenwart eines Komplexbildners durchgeführt wird.

6. Verfahren nach einem der Ansprüche 1 bis 5, **dadurch gekennzeichnet, dass** der Komplexbildner ausgewählt ist aus NaCl, KCl, NaBr, KBr, NaI, KI, NaCN, NaOCN, NaSCN, KCN, KOCN und/oder KSCN.

7. Verfahren nach einem der Ansprüche 1 bis 6, **dadurch gekennzeichnet, dass** das Oxidationsmittel ausgewählt ist aus O₂, O₃ (Ozon), H₂O₂, HClO₄ oder deren Salzen, HClO₃ oder deren Salze, Alkalipermanganat, Alkalipercarbonaten, Alkalipersulfaten und beliebigen Gemischen der voranstehenden.

8. Verfahren nach einem der Ansprüche 1 bis 7, **dadurch gekennzeichnet, dass** das Reduktionsmittel ausgewählt ist aus H₂S, SO₂, SO₃, CO, H₂, Methanol, Ethanol und beliebigen Gemischen daraus.

9. Verfahren nach einem der Ansprüche 1 bis 8, **dadurch gekennzeichnet, dass** das Edelmetall mit mechanischen oder elektrochemischen Verfahren aus der Reaktionslösung isoliert wird.

## Claims

1. Process for isolating noble metal from noble metal-containing materials in aqueous solution, which comprises the steps
A) contacting of the noble metal-containing materials with an oxidizing agent,
B) contacting of the noble metal-containing material with a reducing agent,
wherein the process steps A and B represent a reaction cycle which is repeated.

2. Process according to Claim 1, **characterized in that** the noble metals are selected from the group consisting of Pt, Pd, Rh, Au, Ru, Ir, Os and Ag.

3. Process according to any of Claims 1 to 4, **characterized in that** the reaction is carried out at a pH of ≤ 3 or ≥ 10.

4. Process according to any of Claims 1 to 3, **characterized in that** the pH is set by means of an acid selected from among HCl, HClO₄, H₂SO₄, HNO₃, aqua regia and any mixtures of the above, or an alkali metal hydroxide.

5. Process according to any of Claims 1 to 4, **characterized in that** at least one of the two process steps is carried out in the presence of a complexing agent.

6. Process according to any of Claims 1 to 5, **characterized in that** the complexing agent is selected from among NaCl, KCl, NaBr, KBr, NaI, KI, NaCN, NaOCN, NaSCN, KCN, KOCN and/or KSCN.

7. Process according to any of Claims 1 to 6, **characterized in that** the oxidizing agent is selected from among O₂, O₃ (ozone), H₂O₂, HClO₄ or salts thereof, HClO₃ or salts thereof, alkali metal permanganate, alkali metal percarbonates, alkali metal persulfates and any mixtures of the above.

8. Process according to any of Claims 1 to 7, **characterized in that** the reducing agent is selected from among H₂S, SO₂, SO₃, CO, H₂, methanol, ethanol and any mixtures thereof.

9. Process according to any of Claims 1 to 8, **characterized in that** the noble metal is isolated from the reaction solution by mechanical or electrochemical methods.

## Revendications

1. Procédé pour la récupération de métal noble à partir de matériaux contenant un métal noble en solution aqueuse, qui comprend les étapes de
A) mise en contact des matériaux contenant un métal noble avec un agent d'oxydation,
B) mise en contact des matériaux contenant un métal noble avec un agent de réduction,
les étapes de procédé A et B représentant un cycle de réaction qui est répété.

2. Procédé selon la revendication 1, **caractérisé en ce que** les métaux nobles étant choisis dans le groupe constitué par Pt, Pd, Rh, Au, Ru, Ir, Os et Ag.

3. Procédé selon l'une quelconque des revendications 1 à 4, **caractérisé en ce que** la réaction est mise en œuvre à une valeur de pH ≤ 3 ou ≥ 10.

4. Procédé selon l'une quelconque des revendications 1 à 3, **caractérisé en ce que** la valeur de pH est ajustée avec un acide qui est choisi parmi HCl, HClO₄, H₂SO₄, HNO₃, l'eau régale et de quelconques mélanges des composés précédents, ou avec un hydroxyde alcalin.

5. Procédé selon l'une quelconque des revendications 1 à 4, **caractérisé en ce qu'**au moins l'une des deux étapes de procédé est mise en œuvre en présence d'un agent de formation de complexe.

6. Procédé selon l'une quelconque des revendications 1 à 5, **caractérisé en ce que** l'agent de formation de complexe est choisi parmi NaCl, KCl, NaBr, KBr, NaI, KI, NaCN, NaOCN, NaSCN, KCN, KOCN et/ou KSCN.

7. Procédé selon l'une quelconque des revendications 1 à 6, **caractérisé en ce que** l'agent d'oxydation est choisi parmi O₂, O₃ (ozone) , H₂O₂, HClO₄ ou ses sels, HClO₃ ou ses sels, un permanganate d'alcalin, des percarbonates d'alcalin, des persulfates d'alcalin et de quelconques mélanges des composés précédents.

8. Procédé selon l'une quelconque des revendications 1 à 7, **caractérisé en ce que** l'agent de réduction est choisi parmi H₂S, SO₂, SO₃, CO, H₂, le méthanol, l'éthanol et de quelconques mélanges correspondants.

9. Procédé selon l'une quelconque des revendications 1 à 8, **caractérisé en ce que** le métal noble est isolé de la solution de réaction avec un procédé mécanique ou électrochimique.
